Europäisches Patentamt

European Patent Office

Office européen des brevets

(19)

(11) Veröffentlichungsnummer: **0 517 019 A1**

## (12) EUROPÄISCHE PATENTANMELDUNG

(21) Anmeldenummer: **92108292.1**

(22) Anmeldetag: **15.05.92**

(51) Int. Cl.5: **B23B 27/14**

(30) Priorität: **01.06.91 DE 4118068**

(43) Veröffentlichungstag der Anmeldung:
**09.12.92 Patentblatt 92/50**

(84) Benannte Vertragsstaaten:
**DE ES FR GB IT SE**

(71) Anmelder: **Krupp Widia GmbH**
**Münchener Str. 90**
**W-4300 Essen 1(DE)**

(72) Erfinder: **Hintze, Wolfgang, Dr.-Ing.**
**Kurfürstenstrasse 14**
**W-4300 Essen 1(DE)**

(74) Vertreter: **Vomberg, Friedhelm, Dipl.-Phys.**
**Schulstrasse 8**
**W-5650 Solingen 1(DE)**

(54) **Vieleckiger Schneideinsatz.**

(57) Zur Ausrichtung von kontakreduzierenden Spanformelementen (18,33,42,43) entlang einer Schneidkante (11,21,31,50) nehmen die Winkel zwischen der Längsachse länglich ausgebildeter Spanformelemente und einer Schneidkantennormalen (19,29) von maximal 45° im Schneideckenbereich auf Werte von bis zu 0° ab. Vorzugsweise liegen die Längsachsen (15,17,25,29) der Spanformelemente im wesentlichen auf einer Mittelsenkrechten einer Verbindungsstrecke zweier Punkte ($A_1$-$B_1$,$A_1$-$B_2$), die aus dem jeweiligen Spanungsquerschnitt als Endpunkte hervorgehen.

Fig. 1

EP 0 517 019 A1

Die Erfindung betrifft einen vieleckigen Schneideinsatz zur spanbildenden Bearbeitung, der an seinen Spanflächen mit einer Vielzahl von nutförmigen und/oder erhabenen Spanformelementen versehen ist, die im Abstand von der Schneidkante in einer Reihe nebeneinander angeordnet sind und die eine längliche Erstreckung mit einer hierdurch definierten Längsachse besitzen, die zu einer in der Spanflächenebene liegenden Schneidkantennormalen einen Winkel zwischen 0° und 45° bildet.

Schneideinsätze mit erhabenen Spanformelementen sind beispielsweise aus der DE-A 2 231 631, DE-B 2 309 443 und der DE 3 148 535 C2 bekannt.

Aus der DE-A 2 231 631 ist ein Schneidwerkzeug mit einem Spanbrecher, mit einem an dem Brechergrundkörper angebrachten Schneidmesser und mit einer parallel neben dem Schneidmesser verlaufenden Nut bekannt, in der mindestens ein kegelstumpfförmiger Vorsprung an einer Stelle vorgesehen ist, die sich neben einem nasenförmigen Teil des Brechergrundkörpers befindet.

Nach dem in der DE-B 2 309 443 gemachten Vorschlag sind in Spanbrechernuten eine Vielzahl von mit Abstand liegenden Kugelsegmenten bestehende Spanbrechervorsprünge angeordnet.

Die genannten Schneideinsätze sind jedoch aufgrund der Anordnung der Spanformelemente und der Spanbrechernutgeometrie nur in einem begrenzten Bereich unterschiedlicher Schnittbedingungen, wie etwa unterschiedlicher Schnittiefen und Vorschubgeschwindigkeiten, verwendbar. Um die Einsatzmöglichkeit der Schneideinsätze zu erhöhen und zur besseren Formung und Entfernung des Schneidspanes ist in der DE-3 148 535 C2 vorgeschlagen worden, die Spanformelemente im wesentlichen pyramidenstumpfförmig mit im wesentlichen dreieckiger Grundfläche auszubilden, wobei jeweils eine der Grundflächenbegrenzungslinien in Richtung der benachbarten Schneidkante entweder parallel hierzu oder auf einer Bogenlinie ausgerichtet bzw. angeordnet ist.

Schneideinsätze mit nutförmigen Spanformelementen werden in der US-A 4 710 069 sowie in der EP 0 404 744 A2 beschrieben. Die US-A 4 710 069 betrifft einen Schneideinsatz mit einer Freifläche sowie einer Spanfläche mit einer Fase und einer sich hieran anschließenden gekrümmten spanbildenden Fläche, bei der eine Anzahl von gegeneinander entlang und innerhalb der Schneidkante getrennt angeordnete Vertiefungen zur Überbrückung der Grenzlinie zwischen Fase und der hieran anschließenden gekrümmten Spanfläche vorgesehen ist, jedoch kann es im Bereich der Vertiefungen zu Werkstoffablagerungen auf der Spanfläche kommen, wodurch schließlich eine metallische Reibung mit dem Span entsteht. Dies wiederum erhöht die Aufheizung des Schneideinsatzes, was zu stärkerem Verschleiß führt. Während die Vertiefungen nach der US-A 4 710 069 als longitudinale Erstreckung in einer senkrechten Richtung zu der Schneidkante angeordnet sind, wird in der EP 0 404 744 A2 vorgeschlagen, die Vertiefungen in einer Richtung unter einem Winkel zwischen 5° bis 45° mit der Senkrechten zu der Schneidkante anzuordnen. Hiedurch soll berücksichtigt werden, daß der Spanflußwinkel gewöhnlicherweise einen Wert von 5° bis 15° hat. Die Vertiefungen sind jedoch entlang der Schneidkante allesamt parallel ausgerichtet, so daß im wesentlichen nur für eine Schnittiefe bzw. einen Spanflußwinkel die Spanformelementausrichtung optimal ist. Bei anderen Schnittiefen besteht hingegen weiter die Gefahr, daß sich während des Bearbeitungsvorganges des Werkstückes die Vertiefungen allmählich zusetzen, so daß es schließlich an der betreffenden Spanfläche zu erhöhten Reibungen und Zerspankräften kommt.

Es ist Aufgabe der vorliegenden Erfindung, den eingangs genannten Schneideinsatz dahingehend weiter zu entwickeln, daß die Wirksamkeit der den Kontakt zwischen dem ablaufenden Span und der Spanfläche reduzierenden Spanformelemente über einem breiten Bereich von Spanungsquerschnitten bzw. Spanablaufrichtungen erreicht wird.

Diese Aufgabe wird durch die im Patentanspruch 1 angegebene Maßnahme gelöst, deren kennzeichnender Teil darin besteht, daß von jeder beim Zerspanen mit einem Werkstück in Eingriff stehenden Schneidecke entlang der ebenfalls in Eingriff stehenden Schneidkante die Winkel von maximal 45° im Schneideckenbereich auf Werte bis zu 0° abnehmen. Anders als bisher nach dem Stand der Technik vorgeschlagen, sind somit nebeneinanderliegende Spanformelemente nicht mehr zueinander parallel, sondern unter verschiedenen Winkeln angeordnet, wobei der jeweilige Winkel der Längsachse der Spanformelemente zu einer Schneidkantennormalen von der Schneidkantenecke zur Schneidkantenmitte zwischen zwei Schneidecken oder zum Schneidkantenende abnimmt. Die Winkelabnahme kann in gleichen Schritten erfolgen, so daß bei zehn bis zwanzig nebeneinander angeordneten Spanformelementen der Winkel von 45° in der Schneidenecke jeweils etwa um 5° bis 2,5° zur Schneidkantenmitte oder zur nächsten Ecke abnimmt.

Nach einer bevorzugten Ausführungsform liegen die Längsachsen der Spanformelemente im wesentlichen auf einer Mittelsenkrechten einer Verbindungsstrecke zweier Punkte, die sich aus dem Spanungsquerschnitt als Endpunkte ergeben. Es handelt sich hierbei in einer Draufsicht auf eine Schneidplatte gesehen um die Endpunkte der Kurvenlinie, welche einen bestimmten Spanungsquerschnitt begrenzen. Je großflächiger die Spanungsbreite wird, d.h. je länger die wirksame Schneidkantenlänge ist, desto mehr nähern sich die Mittelsenkrechten der Richtung der Schneidkantennormalen.

Vorzugsweise sind die Längsachsen der Spanformelemente von jeder Schneidecke bis zur Schneidkantenmitte der anliegenden Schneidkante bzw. -kanten ausgerichtet, wordurch sich bei dreieckigen Wendeschneidplatten pro Schneidecke jeweils zwei angrenzende Schneidkantenhälften, also insgesamt sechs Bereiche ergeben. Für jede Schneidkante liegen in benachbarten Schneidkantenhälften die Längsachsen spiegelsymmetrisch zu einer durch die Schneidkantenmitte gehenden Vertikalachse.

Nach einer weiteren Ausführungsform der Erfindung sind die Spanformelemente als in Reihe (spaltenweise) nebeneinander angeordnete Längsrippen ausgebildet. Weiterhin ist es jedoch auch möglich, Spanformelemente nicht nur spaltenweise, sondern auch zeilenweise nebeneinander und hintereinander anzuordnen. Durch die Hintereinanderordnung von Spanformelementen werden auch bei größeren Vorschüben Bereiche mit Spanformelementen bestückt, so daß der Span auch in kantenferneren Abständen eine Führung erhält.

Je nachdem, ob es sich bei dem Schneideinsatz um einen solchen für Fräs-, Dreh- oder Bohrwerkzeuge handelt, beträgt die Höhe bzw. Tiefe der Spanformelemente gegenüber der sie umgebenden Spanfläche 0,01 bis 0,08 mm, vorzugsweise von 0,02 mm bis 0,04 mm, oder 0,02 bis 0,15 mm, vorzugsweise von 0,03 bis 0,04 mm. Vorzugsweise sind die Spanformelemente im Längsquerschnitt und im dazu senkrechten Querschnitt, das heißt parallel zur Schneidkante, kantenfrei konvex geformt. Hierdurch werden Reibungsspitzen mit der Gefahr des Ausbröckelns bei ablaufendem Span vermieden. Zumindest im oberen Bereich bei erhabenen Spanformelementen oder im unteren Bereich bei nutenförmigen Spanformelementen besitzt die konvexe Form einen Radius von 0,2 mm bis 2 mm. Die maximale Breite der Spanformelemente im Bereich der Spanfläche gemessen beträgt für Fräswerkzeuge 0,3 mm bis 0,4 mm und für Dreh- oder Bohrwerkzeuge 0,5 mm bis 1,5 mm. Bevorzugt wird die Länge der Spanformelemente drei bis zwanzig Mal so groß wie deren maximale Basisbreite gewählt. Die gleiche Wirkung wie bei einem erhabenen Vollkörper-Spanformelement in Form einer Längsrippe kann jedoch auch erreicht werden, wenn in entsprechender Weise mehrere Spanformelemente hintereinander angeordnet sind, deren Länge insgesamt der Länge eines Vollkörpers entspricht. Die dazwischenliegenden Bereiche sind jedoch dann so begrenzt zu wählen, daß der ablaufende Span gegenüber einem Vollkörper keine Richtungsänderung erfährt.

Die Spanfläche des Schneideinsatzes wird bevorzugt in senkrechter Richtung zur Schneidkante als Spanbrechernut konkav ausgebildet mit einem einbeschriebenen Radius zwischen 2 mm und 5 mm. Der Spanwinkel der betreffenden Spanbrechernut, das ist der tangentiale Winkel gegenüber der durch die Schneidkanten bestimmten Ebene, liegt vorzugsweise zwischen 10° und 40°, weiterhin bevorzugt zwischen 20° und 30°. Nach einer weiteren Ausführungsform der Erfindung besitzt der Schneideinsatz eine umlaufende Fase unter einem Winkel von 0° oder negativen Winkeln. Die Seitenfläche wird vorzugsweise als Freifläche ausgestaltet.

Ausführungsbeispiele der Erfindung sind in den Zeichnungen dargestellt. Es zeigen

Fig. 1 und 2     jeweils viereckige Schneideinsätze mit dort eingetragenen Längsachsen für die Spanformelementausrichtung,

Fig. 3     einen dreieckigen Schneideinsatz mit einer weiteren Variante der Längsachsenausrichtung,

Fig. 4a bis e     jeweilige Spanformelemente in verschiedenen Ansichten und

Fig. 5     eine Teilansicht eines Schnitts senkrecht zur Span- und zur Freifläche.

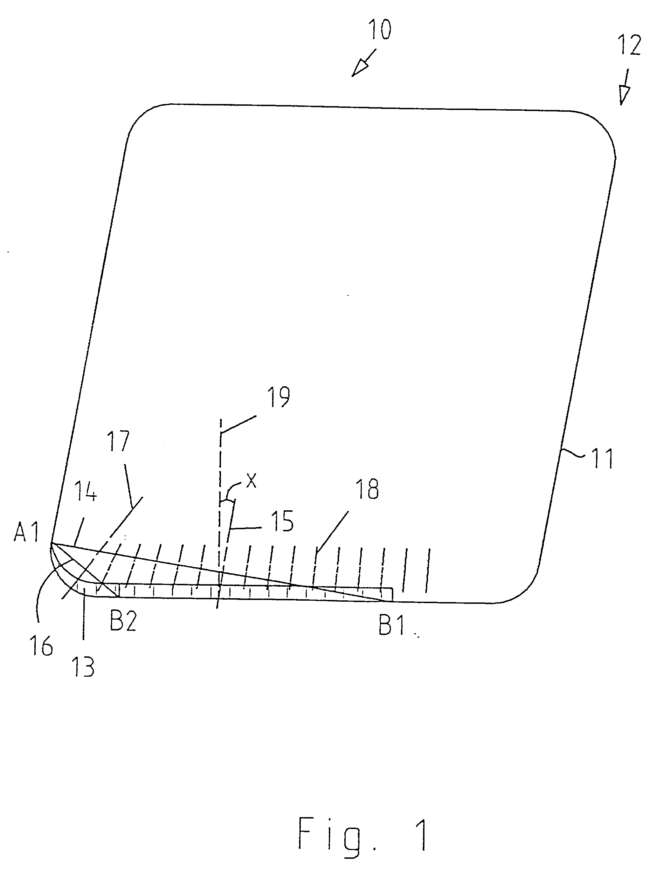

Die in Fig. 1 dargestellte Wendeschneidplatte 10 ist in ihrer Grundfläche rhombisch ausgestaltet und besitzt vier gleichlangen Schneidkanten 11, die sich an jeweilige Schneidecken 12 anschließen. Anhand der unteren Schneidkante und der dort links dargestellten Schneidecke ist der Bereich 13 schraffiert gekennzeichnet, der konkret den wirksamen Spanungsquerschnitt darstellt. Dieser Bereich 13 besitzt die Endpunkte $A_1$ und $B_1$, deren Verbindungsstrecke mit Bezugzeichen 14 bezeichnet ist. Hieraus ergibt sich die Mittelsenkrechte 15, die gleichzeitig für den durch die Eckpunkte $A_1$ und $B_1$ dargestellten Spanungsquerschnitt die Richtung des betreffenden Spanformelementes angibt. Bei steilerem Anstellwinkel ergibt sich im Grenzfall, in dem nur die Schneidecke mit dem Werkstück in Eingriff steht, als Verbindungslinie 16 zwischen den Eckpunkten $A_1$ und $B_2$ eine Mittelsenkrechte 17, die gleichzeitig geometrischer Ort hinsichtlich der Lage und Ausrichtung für das längliche Spanformelement ist. Die übrigen Spanformelemente, die durch Striche gekennzeichnet sind, wie beispielsweise 18, ergeben sich in entsprechender Weise durch Festlegung der Lage der Mittelsenkrechten, wie dies zurvor am Beispiel 15 und 17 erläutert worden ist. Bei dem in Fig. 1 dargestellten Schneideinsatz beträgt der Winkel x zur Schneidkantennormalen 19 für die Ausrichtung des in der Schneidecke liegenden Spanformelementes 37° und beispielsweise für das durch die Winkelhalbierende 15 bestimmte Spanformelement ca. 9°.

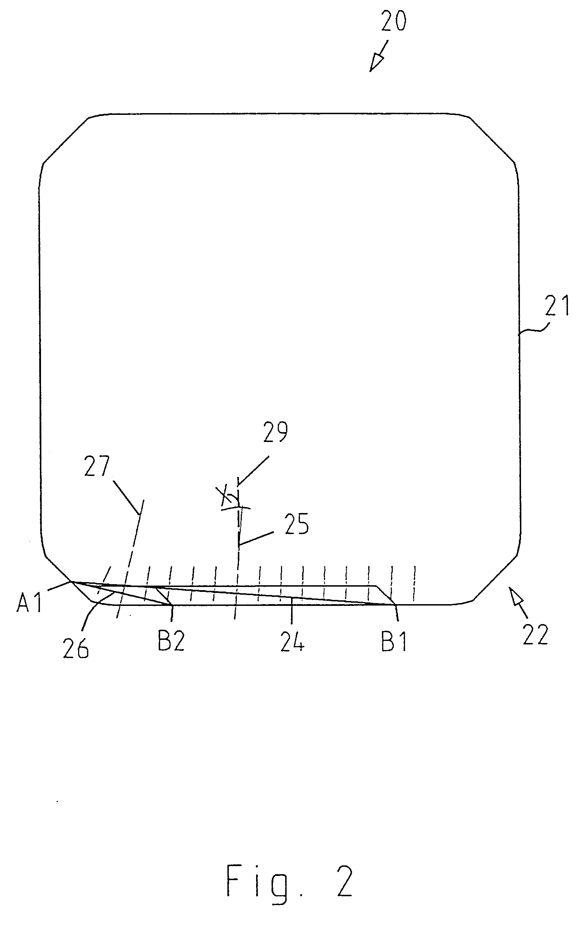

Während der in Fig. 1 dargestellte Schneideinsatz 10 abgerundete Kanten 12 besitzt, handelt es sich bei dem Schneideinsatz nach Fig. 2 um einen im wesentlichen viereckigen, rechtwinkligen Schneideinsatz 20 mit vier langen Schneidkanten 21 und Abschrägungen 22 im Schneideckenbereich. Der wirksame Spanquerschnitt wird im Fall einer längeren in Eingriff stehenden Schneide durch die Punkte $A_1$ und $B_1$ begrenzt, deren Verbindungslinie mit 24 bezeichnet ist. Die hierauf errichtete Mittelsenkrechte 25 bestimmt den Ort des dortigen Spanformelementes und die Richtung der Längsachse. Bei an-derer Schnittiefe mit einer Spanquerschnittsbegrenzung durch die Punkte $A_1$ und $B_2$ ergibt sich eine Verbindungslinie 26 und hierauf die Mittelsenkrechte 27, die in entsprechender Weise Lage und Richtung des Spanformelementes bestimmt. Der Winkel x der Mittelsenkrechten 27 beträgt im vorliegenden Fall 15° und bezüglich der Mittelsenkrechten 25 6°.

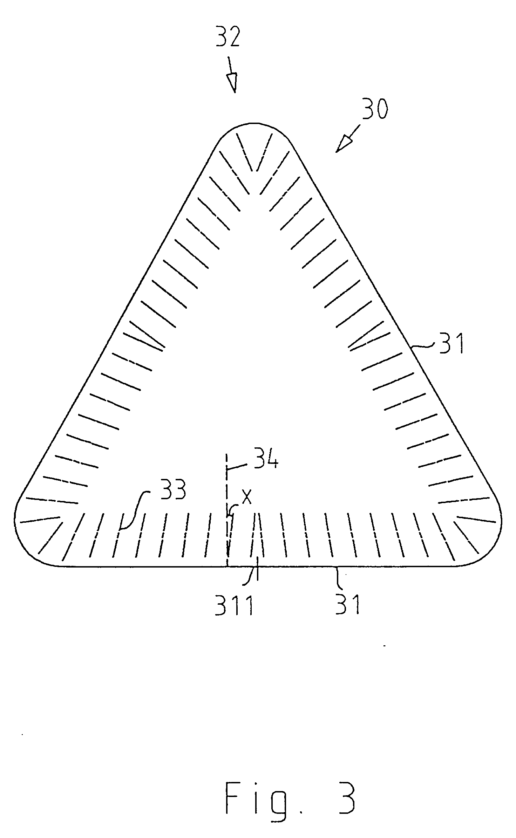

Eine andersartige Ausführungsform ist am Beispiel eines dreieckigen Schneideinsatzes 30 in Fig. 3 dargestellt. Die jeweiligen Schneidkanten 31 bilden Schneidecken 32, die abgerundet sind. Wie am Beispiel der Fig. 1 und 2 erläutert, ergeben sich in entsprechender Weise Orte und Richtungen für die Längsachsen der Spanformelemente, die im vorliegenden Fall mit Bezugszeichen 33 angedeutet sind. Anders als im Falle der Fig. 1 und 2 nimmt der Winkel x gegenüber einer Schneidkantennormalen 34 von der jeweiligen Schneidecke 32 jedoch nur bis zur Schneidkantenmitte 311 ab, wobei die Längsachsen der benachbarten Schneidkantenhälfte spiegelsymmetrisch, d.h. mit einem entgegengesetzt orientierten Drehwinkel x geneigt sind. Im vorliegenden Fall ändern sich die Winkel x von der Schneidecke, wo sie ca. 35° betragen, bis hin zum Schneidkantenmittenbereich auf 6°. Hierdurch ist hinreichend gewährleistet, daß der betreffende Schneideinsatz rechts wie links eingesetzt werden kann. Die wirksame Schneidkantenlänge ist hierbei auf die halbe Schneidkantenlänge im Maximum begrenzt.

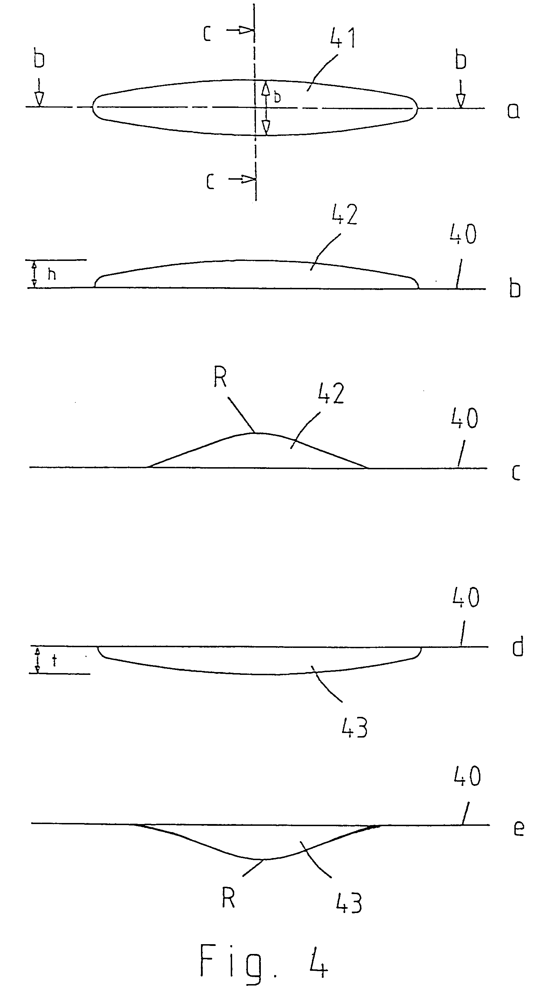

Ein Beispiel für die Formgestaltung der Spanformelemente ist Fig. 4 zu entnehmen. Das Spanformelement kann entweder erhaben als Rippe (siehe Fig. 4b und c) oder als Nut (siehe Fig. 4d und e) ausgebildet sein. Die im Bereich der Spanfläche 40 gebildete Basisfläche 41 bzw. bei einem nutförmigen Spanformelement der Kantenbereich ist in der Draufsicht oval bis länglichoval und besitzt eine maximale Breite b. Fig. 4b zeigt einen Schnitt eines erhabenen Spanformelmentes 42 entlang der Linie b-b sowie Fig. 4c einen Schnitt entlang der Linie c-c jeweils nach Fig. 4a. Die Höhe h bzw. die Tiefe t der Spanformelemente liegt gegenüber der sie umgebenden Spanfläche 40 im Bereich von etwa 0,03 mm . Im oberen Bereich (siehe Fig. 4c, 4e) beträgt der Radius R der Spanformelemente 0,2 mm bis maximal 2 mm.

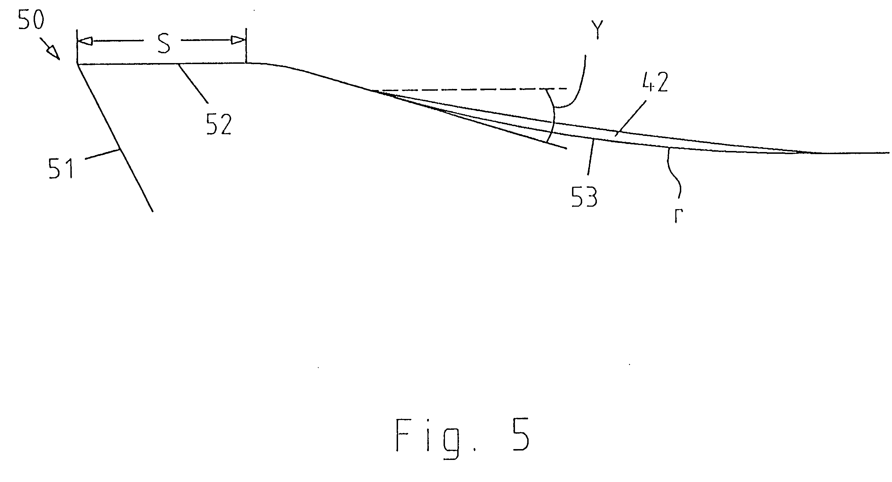

Einen zur Schneidkante 50 vertikalen Teilschnitt zeigt Fig. 5. Die Schneidkante 50 wird durch eine Freifläche 51 sowie eine Fase 52 der Länge s gebildet. An die Fase 52 schließt sich eine Spanbrechernut 53 mit einer konkaven Form an, deren einbeschriebener Radius r etwa bei 2 mm liegt. In dieser Spanbrechernut 53 ist ein Spanformelement 42 - hier als Längsrippe ausgebildet - angeordnet. Die vorliegende Erfindung ist keineswegs auf die in den Fig. 1 bis 5 dargestellten Ausführungsformen beschränkt, beispielsweise kann hinsichtlich der Schneideinsatzgeometrie auch auf eine solche Form zurückgegriffen werden, wie sie im eingangs zitierten Stand der Technik beschrieben ist.

**Patentansprüche**

1. Vieleckiger Schneideinsatz (10, 20, 30) zur spanbildenden Bearbeitung, der an seinen Spanflächen (40, 53) mit einer Vielzahl von nutförmigen und/oder erhabenen Spanformelementen (42, 43) versehen ist, die im Abstand von der Schneidkante (11, 21, 31, 50) in einer Reihe nebeneinander angeordnet sind und die eine längliche Erstreckung mit einer hierdurch definierten Längsachse (15, 17, 18, 25, 27, 33) besitzen, die zu einer in der Spanflächenebene liegenden Schneidkantennormalen (19, 29, 34) einen Winkel x zwischen 0° und 45° bildet, **dadurch gekennzeichnet,** daß von jeder beim Zerspanen mit einem Werkstück in Eingriff stehenden Schneidecke (12, 22, 32) entlang der ebenfalls in Eingriff stehenden Schneidkante (11, 21, 31) die Winkel (x) von maximal 45° im Schneideckenbereich auf Werte bis zu 0° abnehmen.

2. Schneideinsatz nach Anspruch 1, dadurch gekennzeichnet, daß die Längsachsen (15, 17, 18, 25, 27, 33) der Spanformelemente im wesentlichen Mittelsenkrechten einer Verbindungsstrecke (14, 16, 24, 26) zweier Punkte ($A_1$, $B_1$, $B_2$) sind, die aus dem jeweiligen Spanungsquerschnitt als Endpunkte hervorgehen.

3. Schneideinsatz nach Anspruch 1 oder 2, gekennzeichnet durch eine Ausrichtung der Längsachsen (15, 17, 18, 25, 27, 33) der Spanformelemente (42, 43) von jeder Schneidecke (12, 22, 32) bis zur Schneidkantenmitte (311) der anliegenden Schneidkante(n).

4. Schneideinsatz nach einem der Ansprüche 1 bis 3, dadurch gekennzeichnet, daß die Spanformelemente (42, 43) als in Reihe (spaltenweise) nebeneinander angeordnete Längsrippen (42) ausgebildet sind.

5. Schneideinsatz nach einem der Ansprüche 1 bis 4, dadurch gekennzeichnet, daß die Spanformelemente (42, 43) spaltenweise und zeilenweise neben- und hintereinander angeordnet sind.

6. Schneideinsatz nach einem der Ansprüche 1 bis 5, dadurch gekennzeichnet, daß die Spanformelemente (42, 43) eine Höhe (h) oder Tiefe (t) gegenüber der sie umgebenden Spanfläche (40, 53) von 0,01 bis 0,08 mm, vorzugsweise von 0,02 mm bis 0,04 mm, für Fräswerkzeuge oder von 0,02 bis 0,15 mm, vorzugsweise von 0,03 bis 0,04 mm, für Dreh- oder Bohrwerkzeuge aufweisen.

7. Schneideinsatz nach einem der Ansprüche 1 bis 6, dadurch gekennzeichnet, daß die Spanformelemente (42, 43) im Längsquerschnitt und im dazu senkrechten Querschnitt (parallel zur Schneidkante) eine kantenfreie konvexe Form haben.

8. Schneideinsatz nach Anspruch 7, dadurch gekennzeichnet, daß die konvexe Form zumindest im oberen Bereich bei erhabenen Spanformelementen (42) oder im unteren Bereich bei nutenförmigen Spanformelementen (43) ein Radius R von 0,2 mm bis 2 mm aufweisen.

9. Schneideinsatz nach einem der Ansprüche 1 bis 8, dadurch gekennzeichnet, daß die im Bereich der Spanfläche (40, 53) gemessene maximale Basisbreite (b)der Spanformelemente (42,43) für Fräswerkzeuge 0,3 mm bis 0,4 mm und für Dreh- oder Bohrwerkzeuge 0,5 mm bis 1,5 mm beträgt.

10. Schneideinsatz nach Anspruch 9, dadurch gekennzeichnet, daß die Länge der Spanformelemente 3 bis 20 mal so groß wie deren maximale Basisbreite (b) ist.

11. Schneideinsatz nach einem der Ansprüche 1 bis 10, dadurch gekennzeichnet, daß die Spanfläche (53) in senkrechter Richtung zur Schneidkante (50) als Spanbrechernut konkav ausgebildet ist und vorzugsweise einen einbeschriebenen Radius (r) zwischen 2 mm bis 5 mm aufweist.

12. Schneideinsatz nach Anspruch 11, dadurch gekennzeichnet, daß der Spanwinkel (y) der Spanbrechernut (53) 10 bis 25 beträgt.

13. Schneideinsatz nach einem der Ansprüche 1 bis 12, dadurch gekennzeichnet, daß eine umlaufende Fase (52) unter einem Winkel von 0 oder negativen Winkeln vorgesehen ist.

Fig. 1

Fig. 2

7

Fig. 3

Fig. 4

EP 0 517 019 A1

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 545 769 (HEINLEIN) | 1,2 | B23B27/14 |
| A | * Seite 4, Zeile 28 - Seite 5, Zeile 6; Abbildungen 4,5 * | 11,13 | |
| | --- | | |
| A | EP-A-0 404 744 (SECO TOOLS AB) | | |
| | * Abbildung 1 * | | |
| | ----- | | |

| | RECHERCHIERTE SACHGEBIETE (Int. Cl.5) |
|---|---|
| | B23B |
| | B23C |

Der vorliegende Recherchenbericht wurde für alle Patentansprüche erstellt

| Recherchenort | Abschlußdatum der Recherche | Prüfer |
|---|---|---|
| DEN HAAG | 01 SEPTEMBER 1992 | BOGAERT. F.L. |

EPO FORM 1503 03.82 (P0403)